# EUROPEAN PATENT APPLICATION

(11) **EP 1 780 093 A1**
(43) Date of publication of application: **02.05.2007**
(21) Application number: 05746011.5
(22) Date of filing: 02.06.2005
(51) Int. Cl.: B62B 7/08, A61H 3/04

(54) **MOVABLE CARRIAGE**

(30) Priority: 12.08.2004 JP 2004235140
(71) Applicant: Aprica Ikujikenkyukai Aprica Kassai Kabushikikaisha, Osaka-shi, Osaka 542-0082 (JP)
(72) Inventor: KASSAI, Kenzou, Osaka-shi, Osaka 5420083 (JP); OHNISHI, Ichiro, Osaka-shi, Osaka 5420082 (JP)
(74) Representative: Oser, Andreas
(86) International application number: PCT/JP2005/010131
(87) International publication number: WO 2006/016446

(57) **Abstract**

A movable carriage 10 includes a load support member 11 which supports loads, and leg members 12a and 12b connected to the load support member 11, extending downward and having wheels at their lower ends. The leg member 12b includes a main leg 16, and a branch leg 17 branching from an intermediate position on the main leg 16 and extending downward, the branch leg 17 having a wheel 13b at its lower end.

## Description

### TECHNICAL FIELD

This invention relates to movable carriages such as baby carriages, wheeled walking aids and carts.

### BACKGROUND ART

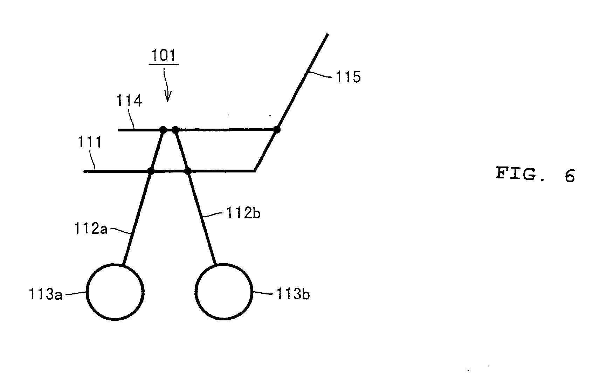

As an example of conventional movable carriages, a basic configuration of a baby carriage is shown in a side view of FIG. 6. Referring to FIG. 6, the baby carriage 101 includes a seat support member 111, a handrail member 114, a front leg 112a, a rear leg 112b and a backrest support member 115, each being a rod-like frame and interconnected to form a three-dimensional seat for infants and toddlers. Additionally, wheels 113a and 113b are provided at a lower end of the front leg 112a and rear leg 112b, respectively.

Basically, wheeled walking aids and carts for elderly people have the same configuration. Such a foldable baby carriage configuration is disclosed in Japanese unexamined patent publication No. 1996-58599, for example.

The conventional baby carriage, as an example of movable carriages, is comprised of the above-discussed components. The front leg 112a and rear leg 112b are connected to the rod-like frames of the seat support member 111, handrail member 114 and backrest support member 115 and secure these components to form a three-dimensional seat for infants and toddlers as discussed above, thus having a frame securing function. On the other hand, the front leg 112a and rear leg 112b each has a wheel fastened at its lower end and holds the wheel, thus having a wheel securing function.

In short, a leg member such as the front leg 112a and rear leg 112b conventionally has both the frame securing function and wheel securing function.

Given that the leg member is of a single component and has both the above frame securing function and wheel securing function, when the configuration of only a portion where the wheel is secured needs to be modified without any alterations and changes to the portion where the frame is secured, for example, redesign of the entire leg member is required including the frame securing portion. With the redesign, stiffness of the body, usage conditions, distribution size and other factors must be reconsidered, therefore taking much effort and cost.

### DISCLOSURE OF IVNENTION

This invention is made while focusing attention on the above problem and has an object to provide a movable carriage capable of independently performing the frame securing function and wheel securing function of a leg member.

The movable carriage according to the present invention is characterized by comprising a load support member for supporting loads and a leg member connected to the load support member, extending downward and having a wheel at its lower end. The leg member includes a main leg and a branch leg branching from an intermediate position on the main leg and extending downward, the branch leg having a wheel at its lower end.

The leg member is comprised of the main leg and the branch leg, the branch leg having the wheel securing function and the main leg having the frame securing function, thereby performing the functions separately.

Consequently, when the configuration of the wheel is modified without any alterations and changes of the frame securing portion in which the frames are secured in three dimension, for example, it is not necessary to redesign the frame portions but reconsider only the configuration of the wheel, thereby saving time, effort and cost.

Preferably, the wheel is a caster which is rotatably supported by the branch leg about an axis along the vertical direction.

More preferably, the movable carriage can be folded with its width-wise dimension reduced.

More preferably, the movable carriage has a width-wise bracing member for keeping the width-wise dimension, the width-wise bracing member being held at the main leg.

The movable carriage may be a baby carriage, wheeled walking aid or cart.

The movable carriage may be provided with a pair of leg members, each leg member being arranged on the left and right sides, respectively, with respect to the traveling direction thereof, or with a plurality of leg members with respect to the traveling direction.

In another aspect of the present invention, the movable carriage comprises a load support member for supporting loads and a leg member connected to the load support member, extending downward and having a wheel at its lower end. The leg member includes a main leg and a branch leg provided on the lower end of the main leg and extending horizontally. The branch leg has a wheel on its end. Preferably, the branch leg has a main-leg connector for connecting to the main leg on one end and a wheel connector for connecting to the wheel on the other end.

The branch leg may be made of metal.

### BRIEF DESCRIPTION OF DRAWINGS

FIG. 1 illustrates the basic concept of the present invention.
FIG. 2 illustrates a baby carriage with rear legs to which one embodiment of the present invention is applied.
FIG. 3 is a view on arrows III-III shown in FIG. 2.
FIG. 4 is a view on arrows IV-IV shown in FIG. 3.
FIG. 5 illustrates the baby carriage of FIG. 3 in its folded state.
FIG. 6 illustrates the basic configuration of a conventional movable carriage.
FIG. 7 is a side view of a baby carriage according to another embodiment of the present invention.
FIG. 8A is a plan view illustrating the details of a branch leg according to the embodiment of the present invention.
FIG. 8B is a front view illustrating the details of the branch leg according to the embodiment of the present invention.

### BEST MODE FOR CARRYING OUT THE INVENTION

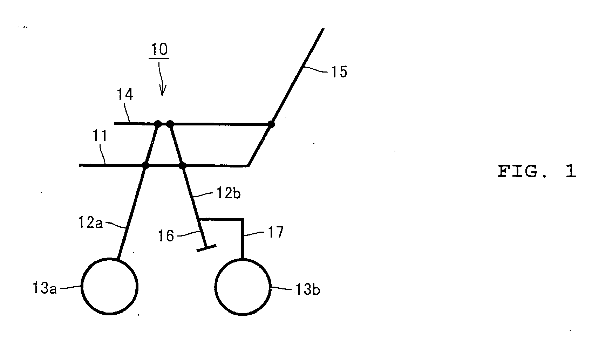

With reference to the drawings, embodiments of the present invention will be described below. FIG. 1 is a drawing to describe a baby carriage, as an example of movable carriages, to which the basic concept of the invention is applied, and corresponds to the conventional movable carriage in FIG. 6.

Referring to FIG. 1, the baby carriage 10 according to this invention includes a seat support member 11 functioning as a load support member, a handrail member 14, a front leg 12a, a rear leg 12b, a backrest support member 15. They are of rod-like frames and interconnected to form a three-dimensional seat for infants and toddlers. The front leg 12a is provided with a wheel 13a at its lower end.

The rear leg 12b includes a main leg 16 connected to the handrail member 14 and seat support member 11 and a branch leg 17 branching from an intermediate position on the main leg 16 and extending downward. The branch leg 17 has a wheel 13b at its lower end. The main leg 16 has an end positioned lower than the branch point of the branch leg 17.

Among the seat support member (load support member) 11, the other members provided on and above the seat support member 11, leg member 12a and rear leg 12b, the configuration positioned higher than the lower end of the main leg 16 is the same as the configuration shown in FIG. 6 including the seat support member 111, the other members provided on and above the seat support member 111, leg member 112a and the portion of the leg member 112b just above the attachment portion of the wheel 113b.

Specifically, the main leg 16 takes charge of performing the frame securing function for connecting and securing the seat support member 11, handrail member 14 and backrest support member 15, each being a rod-like frame, to form a three-dimensional seat for infants and toddlers, while the branch leg 17 takes charge of performing the wheel securing function for securing the wheel 13b. Thus the different functions are assigned to different members.

Therefore, modifications of only the portion for securing the wheel can be achieved without any alterations and changes of the frame securing portion for securing frame, and vice versa. Consequently, it is possible to change the wheel alone to a caster rotatable about an axis along the vertical direction, for example, without any alterations and changes of the frame securing portion.

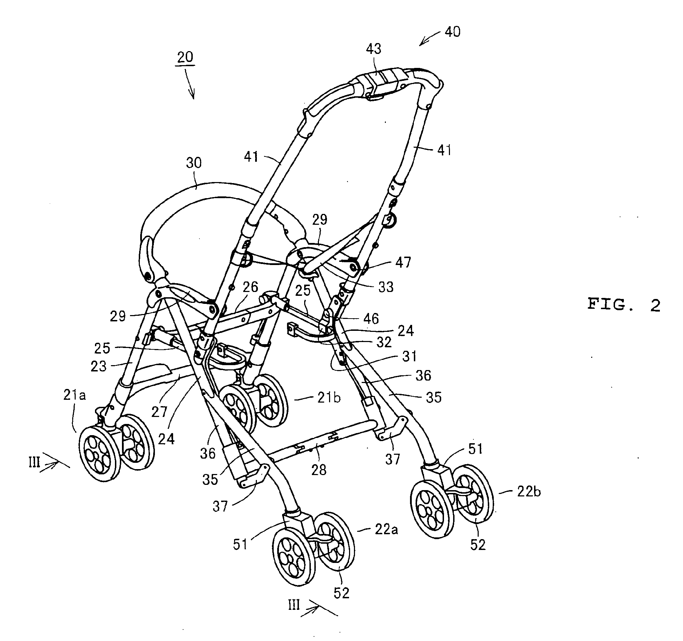

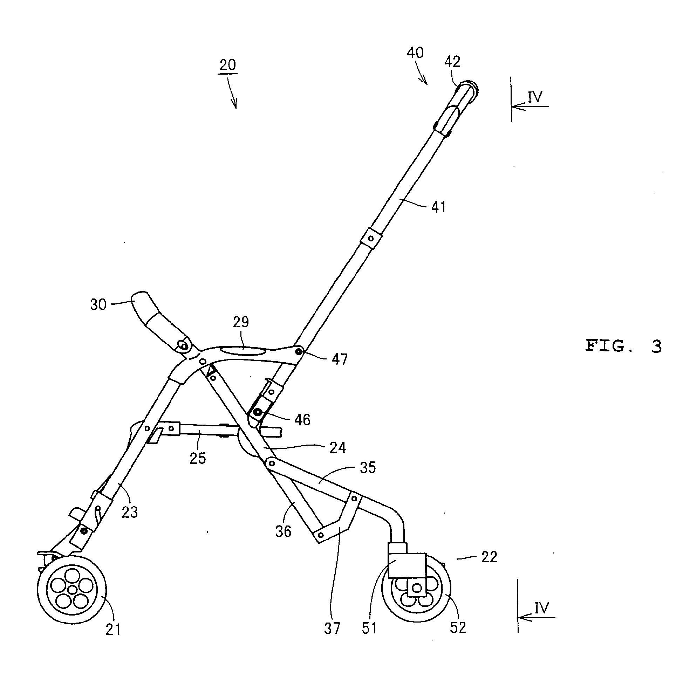

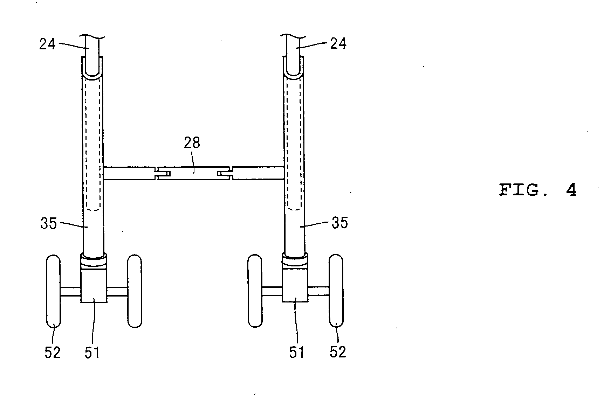

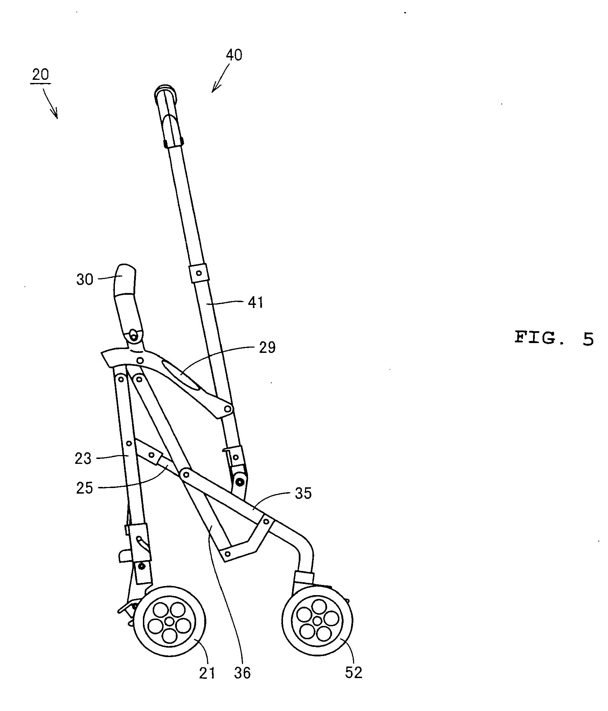

With an example of foldable baby carriages, one embodiment of the present invention will be described below. FIG. 2 is a perspective view of a baby carriage according to the embodiment of the invention; FIG. 3 is a side view of the baby carriage taken along III-III in FIG. 2; FIG. 4 is a rear view of the baby carriage taken along IV-IV in FIG. 3; and FIG. 5 illustrates the baby carriage of FIG. 3 in the folded state.

Referring to FIGS. 2 to 5, the baby carriage 20 is configured to be folded so as to cause four casters 21a, 21b, 22a and 22b to come together from the front, back, left and right. The basic frame structure of the baby carriage 20 includes: a pair of front legs 23 and a pair of main legs 24, the legs of each pair being opposed in the width direction; seat support side rods (corresponding to the seat support member in FIG. 1) 25 extending forward and backward on both sides of the seat; handrail members 29 positioned above both sides of the seat; and side vertical rods (corresponding to the backrest support member in FIG. 1) 41 standing up from the both sides of the seat to extend and connect to an inverted U-shaped push rod 40.

The seat support side rods 25, serving as a load support member, are connected to the front legs 23 and the main legs 24 of rear legs. The main leg 24 is provided with a branch leg 35 that branches off from an intermediate position on the main leg 24 and extends downward. The branch leg 35 is provided with a caster 22 rotatable about an axis along the vertical direction.

Regarding the rear leg, the main leg 24 has a function of securing the frames in three dimension, while the branch leg 35 has a function of securing the caster 22.

The baby carriage 20, which is folded with its width-wise dimension reduced, comprises, in order to brace the frames in the width direction upon expansion of the baby carriage 20, a front-leg coupling member 27 crossing between the pair of front legs 23; a rear-leg coupling member 28 crossing between the pair of main legs 24; a front guard member 30 crossing between the pair of handrail members 29; and a bendable linking-member 26 crossing between a pair of front ends of the seat support side rods 25.

As to the rear leg, the main leg 24 supports the rear-leg coupling member 28 among these coupling members, which secures the carriage body in the width direction as discussed above, therefore having a function of securing the frames in three dimensions upon the expansion of the baby carriage.

In this embodiment, the main leg 24 has the same configuration as the rear leg of the conventional baby carriage, but no wheel support portion. The embodiment separates the functions so as to assign the function of securing the frames of the baby carriage 20 to the main leg and the function of securing the wheels to the branch leg 35, thereby making it possible to modify the wheel securing portion alone without any alterations and changes of the portions having the frame securing function.

Consequently, modifications of the wheel component can be made without the redesign of the frames, therefore saving time, effort and cost. For example, as shown in FIG. 2, casters 22a and 22b each having wheels 52 can be attached to the rear leg through the use of a rotatable rotating yoke 51 about an axis in the vertical direction, as wheels.

It is noted that this is not only limited to the change from the wheel to the caster but also to the other changes and alterations requiring height change.

Next, a description will be made of the additional configuration of the baby carriage 20. In order to achieve the folding operation of the baby carriage 20, the upper end of the front leg 23 and the upper end of the main leg 24 are pivotally connected to the handrail members 29, respectively. Upon the folding operation, the front casters 21 and rear casters 22 come closer from each other.

The front end of the seat support side rod 25 is pivotally connected to the front leg 23, while the rear end is pivotally connected to a reverse member 31 with a connecting member 32 and connecting pivot 46.

The inverted U-shaped push rod 40 comprises a pair of side vertical rods 41 each standing up and extending from the respective side of the seat and an intermediate rod 43 connecting the pair of the side vertical rods 41. The rear end of the handrail member 29 is pivotally connected to the side vertical rod 41 at the connecting pivot 47. The lower end of the side vertical rod 41 is pivotally connected to the reverse member 31 at the connecting pivot 46. Between the pair of side vertical rods 41 crosses a back belt 33 which supports the backrest portion of a seat hammock (not shown) from behind.

In order to reduce the width-wise dimension of the baby carriage with the casters on right and left sides coming closer upon holding the baby carriage, a bendable linking-member 26 connecting the pair of the seat support side rods 25 is provided so as to be upwardly bendable.

The rear-leg coupling member 28 connecting the pair of the branched members 36 and the front-leg coupling member 27 connecting the pair of the front legs 23 are also bendable like the bendable linking-member 26. The front guard member 30 connecting the pair of the handrail members 29 is made of a pliable material so that the left and right end of the front guard member 30 can come closer during the folding operation. The detailed description of the folding structure illustrated from FIG. 3 to FIG. 5 is well known and therefore omitted.

It is possible to provide a plane bracket in a space surrounded by the branch leg 35, branched member 36 which is an extended portion of the main leg 24 and connecting member 37. This bracket can increase in strength near the branch leg 35.

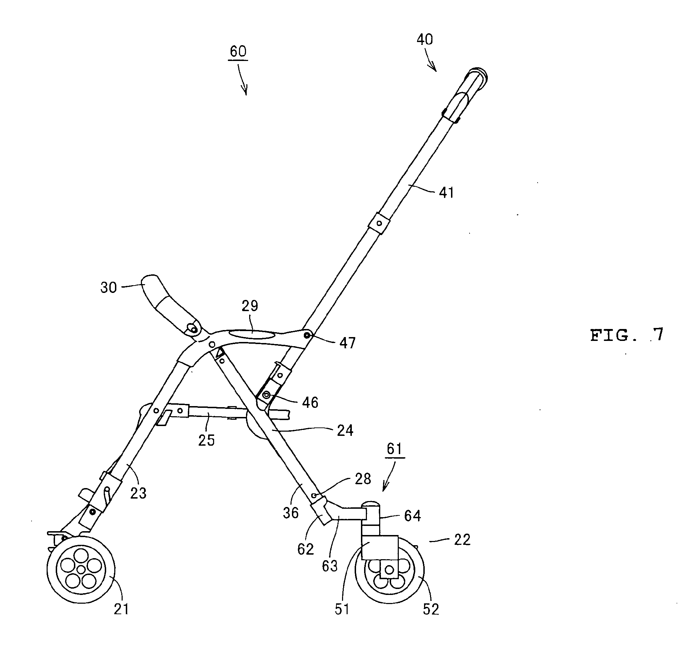

Next, another embodiment of the present invention will be described. FIG. 7 illustrates a baby carriage having four wheel-casters according to the embodiment of the invention, which corresponds to FIG. 3. Referring to FIG. 7, the baby carriage 60 according to the embodiment is different from the above-mentioned embodiment in that, instead of the branched member and branch leg being branched off from the main leg 24, a branched member 36, which is an extension of the main leg 24, comprises at an end a generally horizontal branch leg 61 that holds a caster 22. Because the other parts of the baby carriage are configured in the same manner as the above embodiment, like numerals are given to like elements and their descriptions are not reiterated.

In other words, with reference to FIG. 7, the branch leg 61 includes a branched-member connector 62 for connecting to the lower end of the branched member 36, a horizontal member 63 extending from the branched-member connector 62 in the horizontal direction and a caster connector 64 provided at the other end of the horizontal member 63 to connect to a rotating yoke 51 of the caster 22.

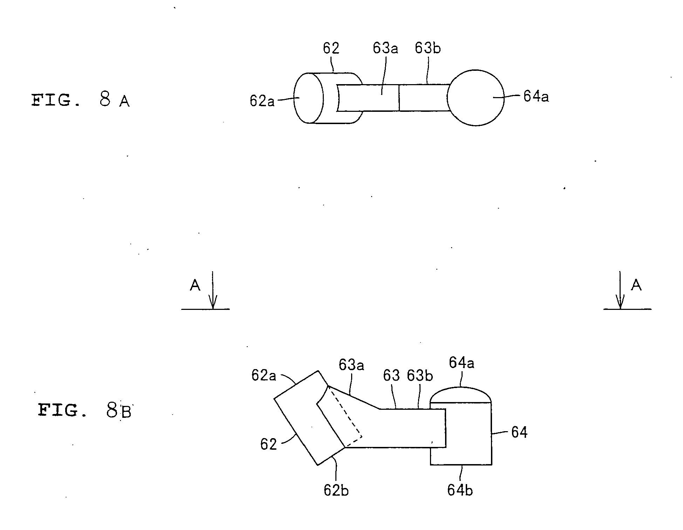

Next description will be made on the branch leg 61 in detail. FIG. 8A is a detailed plan view of the branch leg 61 (viewed from A-A in FIG. 8B), and FIG. 8B is a front view thereof. Referring to FIGS. 8A and 8B, the branched-member connector 62 is cylindrical shaped and provided with an opening portion 62a thereon to house the end portion of the branched member 36. The lower end 62b may be open or closed. The horizontal member 63 is a longitudinal member having a generally rectangular cross-section and includes an upwardly inclined connecting portion 63a on its upper surface to connect with the branched-member connector 62 and a horizontal connecting portion 63b connected with the caster connector 64.

The caster connector 64 is a cylinder extending vertically and provided with an opening 64b to connect to the rotating yoke 51 of the caster 22 at its lower end. The upper portion 64a of the caster connector 64 has a curved surface.

The branch leg 61 in this embodiment is preferably made of metal. The metal branch leg 61 has the effect of improving stiffness of the product and adding an upscale image. It is noted that the preferable method of manufacturing the branch leg 61 with metal is die-casting.

Although the present invention is applied to the baby carriage having four wheel-casters in the above embodiments, the invention is not limited to this, but applicable to wheeled walking aids and carts.

Additionally, the caster connector can be provided with not only casters but also general wheels.

Additionally, the present invention is applied for the rear wheels of the baby carriage in the above-discussed embodiments, the invention is not limited to this, but the casters can be provided for the front wheels in the same manner.

The foregoing has described the embodiments of the present invention by referring to the drawings. However the invention should not be limited to the illustrated embodiments. It should be appreciated that various modifications and changes can be made to the illustrated embodiments within the scope of the appended claims and their equivalents.

### INDUSTRIAL APPLICABILITY

The movable carriage according to the present invention can be advantageously utilized as a basic configuration of movable carriages including baby carriages because the function of securing frames and the function of securing wheels, which are inherent in a leg member, can be performed by different elements independently.

## Claims

1. A movable carriage comprising:
a load support member for supporting loads; and
a leg member connected to said load support member, extending downward and having a wheel at its lower end, wherein;
said leg member includes a main leg and a branch leg branching from an intermediate position on the main leg; and
said branch leg has said wheel on its lower end.

2. The movable carriage according to claim 1, wherein said wheel is a caster rotatably supported by said branch leg about an axis along the vertical direction.

3. The movable carriage according to claim 1, wherein said movable carriage is foldable with its width-wise dimension reduced.

4. The movable carriage according to claim 1, further comprising a width-wise bracing member for keeping the width-wise dimension, wherein said width-wise bracing member is held at said main leg.

5. The movable carriage according to claim 1 includes baby carriages, wheeled walking aids and carts.

6. The movable carriage according to claim 1 comprising a pair of said leg members, each leg member being arranged on the right and left sides, respectively, with respect to the traveling direction of said movable carriage.

7. The movable carriage according to claim 1 comprising a plurality of said leg members in the traveling direction of said movable carriage.

8. A movable carriage comprising:
a load support member for supporting loads; and
a leg member connected to said load support member, extending downward and having a wheel at its lower end, wherein;
said leg member includes a main leg and a branch leg provided on the lower end of the main leg and extending horizontally, and
said branch leg has said wheel on its end.

9. The movable carriage according to claim 8 wherein said branch leg includes a main-leg connector for connecting to said main leg on one end and a wheel connector for connecting to said wheel on the other end.

10. The movable carriage according to claim 1 wherein said branch leg is made of metal.
